# EUROPEAN PATENT SPECIFICATION

(11) **EP 1 528 506 B1**
(45) Date of publication and mention of the grant of the patent: **27.08.2008**
(21) Application number: 04022102.0
(22) Date of filing: 16.09.2004
(51) Int. Cl.: G06T 1/00

(54) **Post decode watermarking of media**
Watermarking von Medien nach der Dekodierung
Insertion de filigrane dans des médias après le décodage

(30) Priority: 29.10.2003 US 515290 P; 09.07.2004 US 887757
(43) Date of publication of application: 04.05.2005
(73) Proprietor: MICROSOFT CORPORATION, Redmond, Washington 98052 (US)
(72) Inventor: Majidimehr, Amir H. Microsoft Corporation, Washington 98052 (US); Ribas, Jordi Microsoft Corporation, Washington 98052 (US); Poole, William Microsoft Corporation, Washington 98052 (US)
(74) Representative: Grünecker, Kinkeldey, Stockmair & Schwanhäusser Anwaltssozietät

(56) References cited:
- EP-A- 1 104 969
- US-A1- 2003 061 607
- ARENA S ET AL: "Digital watermarking applied to MPEG-2 coded video sequences exploiting space and frequency masking" IMAGE PROCESSING, 2000. PROCEEDINGS. 2000 INTERNATIONAL CONFERENCE ON SEPTEMBER 10-13, 2000, PISCATAWAY, NJ, USA,IEEE, vol. 1, 10 September 2000 (2000-09-10), pages 438-441, XP010530645 ISBN: 0-7803-6297-7

## Description

### TECHNICAL FIELD

This invention generally relates to methods and apparatuses for applying watermarks to decoded media.

### BACKGROUND

A work of media is often distributed to consumers via fixed computer-readable media, such as a compact disc (CD-ROM), digital versatile disc (DVD), soft magnetic diskette, hard magnetic disk (e.g., a preloaded hard drive), portable media players, flash memory cards, and similar such media. In addition, these works are sometimes distributed to consumers over private and public networks―such as Intranets, broadcast networks, and the Internet.

Unfortunately, it is relatively easy for a person to pirate the pristine digital content of a work of media at the expense of and bringing harm to the content owners. Content owners include, for example, the content author, artist, publisher, developer, distributor, etc. The content-based industries (e.g., entertainment, music, film, television, etc.) that produce and distribute content are plagued by lost revenues due to digital piracy.

Modem digital pirates effectively rob content owners of their lawful compensation. Unless technology provides a mechanism to protect the rights of content owners, the creative community and culture will be impoverished. One way to protect such rights is to utilize a forensics technology that will aid in the identification of digital pirates and/or their associates.

### Watermark

Embedding one or more signals in a carrier signal (e.g., works of media) is one of the most promising techniques facilitating the protection of the content owner's rights of works of media. This embedded-signal is commonly called a "watermark" and the embedding process is commonly called "watermarking."

Historically, a traditional watermark is a faintly visible mark imprinted on or embedded in print media (such as stationary) that typically identifies the source of the print medium. Watermarks have been around almost as long as print media (such as paper) has existed. Like hallmarks on silver, watermarks were originally used to show which artisan had produced which paper. They later became synonymous with security, appearing on banknotes to deter counterfeiters. An etched serial number and a holographic logo on a product act effectively like a traditional watermark.

Like a traditional watermark on paper, a "digital watermark" is an embedded identifying mark, but it is embedded into data on a work of media. Such media may be analog, but it is typically digital. Generally, watermarking is a process of altering the work of media such that its perceptual characteristics are preserved.

Unlike traditional watermarks, which are intended to be somewhat visible, digital watermarks are typically designed to be imperceptible to the human senses. If in an image, then the digital watermark is typically invisible to the naked eye. If in an audio clip, then the digital watermark is typically inaudible to the human ear. While it is imperceptible to humans, digital watermarks are typically detectable by a specifically designed digital watermark detector.

Those of ordinary skill in the art are familiar with conventional techniques and technology associated with watermark technology. Furthermore, a comprehensive overview of watermarking technology can be found in I.J. Cox, M.L. Miller, and J.A. Bloom, "Digital Watermarking," Morgan Kaufmann Publishers, Academic Press, 2002.

### Application

There are many practical applications for watermarking. One is to identify the content owner and/or the protected rights in a work. Another application may be to hide forensic data that may aid in later determining the source of a pirated copy of a work. An example of such information includes identification of the licensed user.

Analysis of forensic data (hidden as part of a watermark) enables content owners to track and monitor the media that they deliver. These are generally called "forensic watermarks" herein, and an end-user-identifying mark is an example of one such forensic watermark.

Forensic watermarks are believed especially useful in tracking down the source of illegally copied media―much like a vehicle identification number can be used to track a stolen automobile. For example, if copyrighted media appears on a peer-to-peer network or is otherwise believed to be illegally distributed, the content owner can forensically detect the watermark within the media and identify the end-user that could have leaked the media.

### Forensic Watermark Applied Before Encoding

In the past, forensic watermarks have been applied to media (such as digital audio or video) before the media is initially encoded. This approach ensures that forensic watermarks are always in the media, but adds complexity in the encoding process when many unique forensic watermarks are to be inserted.

For example, if a content owner wants to uniquely mark media for a thousand (1000) end-users, the owner must create a thousand separate copies of the media, apply a unique identifier (or watermark) value to each copy, and individually encode, encrypt, and deliver the thousand media copies to the end-users.

In the case of a ten thousand (10,000) unit film distribution, if a single encoder were used to generate the ten thousand copies, each having an individual unique forensic watermark, and assuming each unit would require approximately two hours to encode, it would take over two years to create the watermarked copies alone. Clearly, this problem increases proportionally as the scale of the encoding project increases.

A conventional approach to ameliorate this problem is encoding the forensic watermark only in a portion of a work of media. For example, sometimes only the audio track of a film is watermarked, or perhaps just a segment of such a track.

While this makes the encoding processes quicker, it sacrifices the integrity of the watermark's purpose. Since it is only in part of the work, it is much easier for a content pirate to find, extract, frustrate, or remove the watermarked portions while leaving a significant portion of the work unaffected.

US 2003/061607 A1 relates to systems and methods for providing consumers with entertainment content and advertising content. Initially, a consumer's request for a viewing content is sent through a back channel with a set top box's identification and time stamp to a system operator. As a response to the request, the system operator provides an authorizing license for a particular title or disc as a function of the set top box's identification, the time stamp, a key and a possible random number generator to produce a unique license that is time stamped and transmitted to the set top box. In the set top box, the license is encrypted and stored in a storage device and provides the consumer with access to the particular movie title or content disc. A watermark can be generated by the set top box with or without a network server during playback. For content provided through rental or pay per view services, such as over a network, a unique transactional identification code that is associated with that rental event and the set top box may be downloaded from a remote commerce server. That unique transactional code may then be used to generate a watermark that is embossed on the content to form a watermark. A decoder can be used to decompress and form the appropriate video frames before the watermarks are inserted. In one example, the decoder is programmed to insert the watermarks into the content during the decoding process.

EP 1 104 969 A relates to a technique for encoding/decoding a data stream and for inserting a watermark into said data stream. A mantissa and scale factor representation in the frequency domain for the data stream is provided, from which representation perceptually relevant data carriers can be selected for carrying the watermark and for determining the strength of insertion factors for inserting the watermark. The watermark is inserted into at least one of the perceptual relevant data carriers selected for carrying the watermark, thereby providing a watermark data stream.

Arena S et al.: "Digital Watermarking Applied to MPEG-2 Coded Video Sequences Exploiting Space and Frequency Masking" Image Processing, September 10 to 13, 2000, Picataway, NJ, USA, IEEE, Vol. 1, September 10, 2000, pages 438 to 441 relates to digital watermarking applied to MPEG-2 coded video sequences exploiting space and frequency masking. A watermarking technique for MPEG-2 coded video sequences is described, which works in the bit stream domain in order to simplify the data embedding process in the case in which the original data are already in a compressed form. Thanks to the exploitation of an interleaved encoding technique and of some space and frequency masking considerations, the Bit Error Rate (BER) of the original algorithm has been reduced.

### SUMMARY

It is the object of the present invention to accelerate a decrypting/decoding/watermarking process.

This object is solved by the subject matter of the independent claims.

Preferred embodiments are defined by the dependent claims.

Unlike the conventional approach where a forensic watermark is inserted before a work of media is encoded and then distributed, a technology, described herein, applies a forensic watermark to a work after or as the work is decoded by those receiving the work via a distribution. Consequently, this technology facilitates effective and efficient distribution of works of media by applying the forensic watermark to works after and/or as it is decoded.

### BRIEF DESCRIPTION OF THE DRAWINGS

The same numbers are used throughout the drawings to reference like elements and features.

Fig. 1 is a block diagram of an implementation described herein.

Fig. 2 is a flow diagram showing a methodological implementation described herein.

Fig. 3 is an example of a computing operating environment capable of (wholly or partially) implementing at least one embodiment described herein.

### DETAILED DESCRIPTION

The following description sets forth techniques that facilitate effective and efficient distribution of works of media by applying a forensic watermark to a work after and/or as it is decoded (rather than the conventional approach, which is before the encoding of the works of media). The techniques may be implemented in many ways, including (but not limited to) program modules, computing systems, dedicated electronics (such as multimedia devices), and as part of computer networks.

An exemplary implementation of these techniques may be referred to as an "exemplary watermark-inserting media decoder" and is described below.

In the conventional approaches, a forensic watermark (e.g., an end-user license identification) is inserted before a work of media is encoded and then distributed. So, each copy of a work distributed is separately and independently encoded using a unique forensic watermark in order to identify the intended end-user of each copy.

Since the encoding process for each copy consumes more than a trivial amount of time, the aggregate time required to encode all of these copies of a work with a unique forensic watermark could be quite great if the scope of the distribution of works is more than trivial.

The conventional approaches are not scaleable. They quickly become impractical as the scale of the endeavor grows. However, the exemplary watermark-inserting media decoder, described herein, is fully scalable.

The exemplary watermark-inserting media decoder, described herein, applies a forensic watermark to a work after or as the work is decoded by those receiving the work via a distribution. With the exemplary watermark-inserting media decoder, copies of the same identical work may be mass-produced using conventional production techniques. They do not need to be each processed separately with each having its own unique forensic watermark.

Later, after production and distribution, when an end-user decodes its copy of the mass-produced work of media, a forensic watermark is applied. That mark may uniquely identify that end-user and/or indicate other forensic data. Other forensic data may include day and time stamp (for when the media was decoded), the serial number of the computer or device that is used to decode the media, or any other related information.

### Exemplary Watermark-Inserting Decoding System

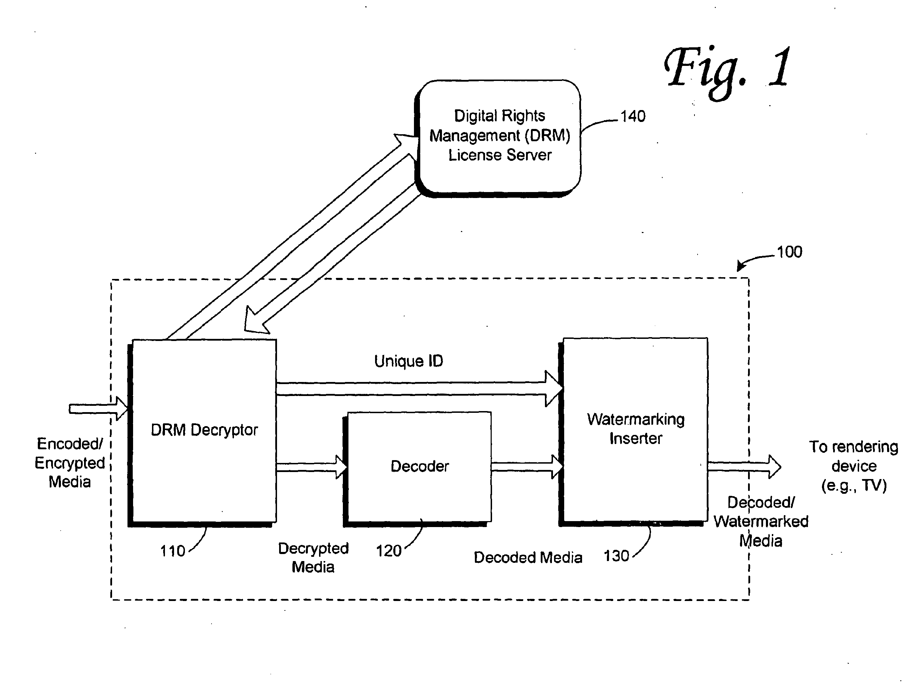

Fig. 1 illustrates a watermark-inserting media decoding system 100. The system may be a client or part of a client. The system may be implemented in hardware, software, or some combination of both. This system may be implemented on a general purpose computer, a specific purpose computer, a portable computer, a personal digital assistant (PDA), an appliance, special purpose electronics (e.g., a DVD player), or other such computing and electronics equipment that are capable of reading, decoding, rendering, and/or presenting works of media (such as music, audio, images, video, etc.).

The components of system 100 are shown inside the dashed line in Fig. 1. The depicted system 100 includes a Digital Rights Management (DRM) decryptor 110, decoder 120, and a watermarking inserter 130. The system 100 is coupled (e.g., via a network such as the Internet) to a DRM license server 140. The exemplary watermark-inserting media decoder may be implemented by the watermark-inserting media decoding system 100. The components of the system may all be implemented in software, hardware, or in a mixture of both.

With this system 100, a work of media need only be encoded and encrypted just once ,and it is done so without using multiple forensic watermarks during the encoding/encrypting process. This dramatically simplifies the encoding and distributing process. Encryption is then performed on the encoded or compressed media. The compressed/encrypted media is then distributed to a client (e.g., an end-user). The watermark is inserted, possibly through a local decoding and/or encryption unit, after decoding-decrypting operations are carried out by the client.

With regard to the explanation and description of the system 100 of Fig. 1, assume that an end-user has acquired a copy of work of media. For example, an organization like the Motion Picture Association of America (MPAA) distributes thousands of copies of nominated films (including pre-theatrical releases) to those who vote the Academy Award (commonly called the OSCAR^{TM}) in various categories. However, because of concerns about piracy, this practice may be discontinued. The exemplary watermark-inserting media decoder may greatly ameliorate piracy concerns in this scenario and/or facilitate discovery of the source of such piracy.

That copy of work of media is the "encoded/encrypted media" supplied to the DRM decryptor 110. Since the content is encrypted (e.g., using Windows^{TM} Media Digital Rights Management (DRM) technology available through the Microsoft Corporation, Inc.), the end-user typically needs to acquire a license to be able to decrypt it. That can be acquired from a DRM license server 140 via a network communications. The license may be provided via other mechanisms, such as over the telephone, by manually entering a code, or from a license server stored along with packaged media (e.g., in a DVD disc)

To acquire a license via a network connection, the end-user typically provides some identification (e.g., a login and password). The license provided by the DRM license server 140 would preferably include a unique identification (ID) that identifies the specific end-user. Once the license is acquired from the DRM license server 140, DRM decryptor 110 decrypts the media content using the license and the decoder 120 decodes (e.g., decompresses) the decrypted content.

The watermarking inserter 130 obtains both the unique ID (and/or some forensic data) and the decoded and decrypted content. It generates a watermark value (e.g., the key or user data) based, at least in part, on this unique ID (or some forensic data) that identifies the specific end-user.

This watermark value may be the same as, correspond directly to, or correspond indirectly to the unique ID obtained by the decryptor 110 as part of the communications between it and the license server 140. In at least one embodiment, the license and unique IDs are different. In another, they may be substantially equivalent.

It automatically inserts this generated watermark value into the decoded and decrypted content. It produces decoded and watermarked media and sends it to some consumer of such data (e.g., a television).

Since the watermark value inserted in the decoded media is based, at least in part, upon the unique ID that identifies the specific end-user, a content owner can track the source of each work of media it examines. The owner can detect the watermark in the media, find the unique ID, and consequently identify the end-user.

### Methodological Implementation

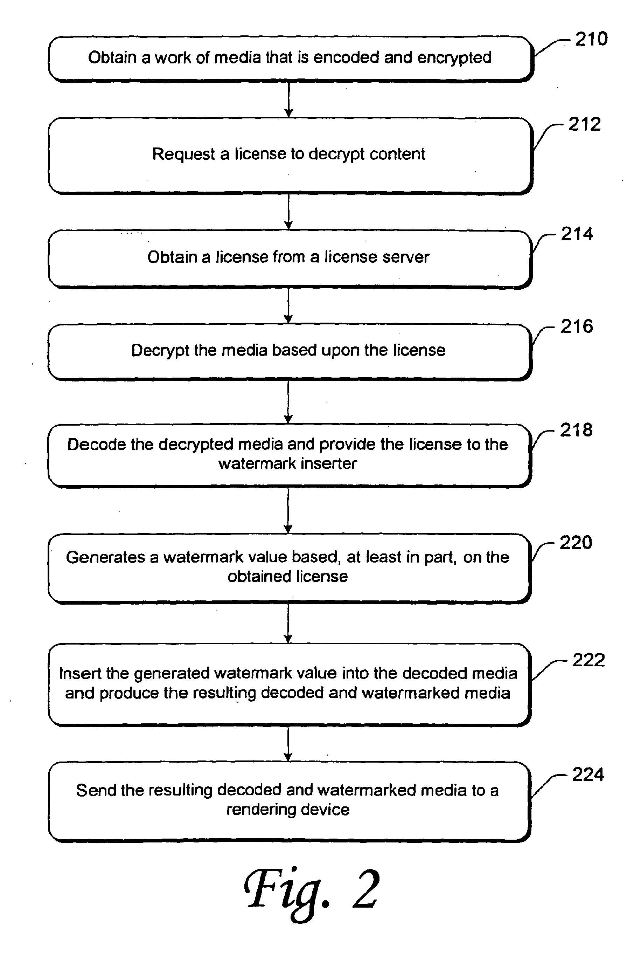

Fig. 2 shows a methodological implementation of the watermark-inserting media decoding system 100. This methodological implementation may be performed in software, hardware, or a combination thereof For ease of understanding, the method steps are delineated as separate steps; however, these separately delineated steps should not be construed as necessarily order dependent in their performance.

At 210 of Fig. 2, the system 100 obtains a work of media that is encoded and encrypted. Obtaining, here, includes any mechanism for receiving such data. It can include loading a DVD, CD, or other removable media.

At 212, it requests a license to decrypt content. An end-user may be required to perform a verification process, such as providing a username and password.

At 214, it obtains a license from a license server. Alternatively, the system may obtain a license via other mechanisms, such as over the telephone, by manually entering a code, or from a license server stored along with packaged media (e.g., in a DVD disc)..

At 216, the system 100 decrypts the media based upon the license.

At 218 of Fig. 2, it decodes the decrypted media. It also provides the license (which may include or be the same thing as the unique ID) to the watermarking inserter 130 of the system 100.

At 220, the watermarking inserter 130 generates a watermark value (e.g., the key or user data) based, at least in part, on the obtained license, which includes a unique ID that identifies the specific end-user. This watermark value may be the same as, correspond directly to, or correspond indirectly to the unique ID.

At 222, the watermarking inserter 130 inserts the generated watermark value into the decoded media and produces the resulting decoded and watermarked media. This resulting media is marked with the forensic watermark that may help a content owner determine the licensed end-user of a copy of this work and other forensic data.

At 224, the system 100 sends the resulting decoded and watermarked media to a rendering device (e.g., a television) for presentation on that device.

### Exemplary Computing System and Environment

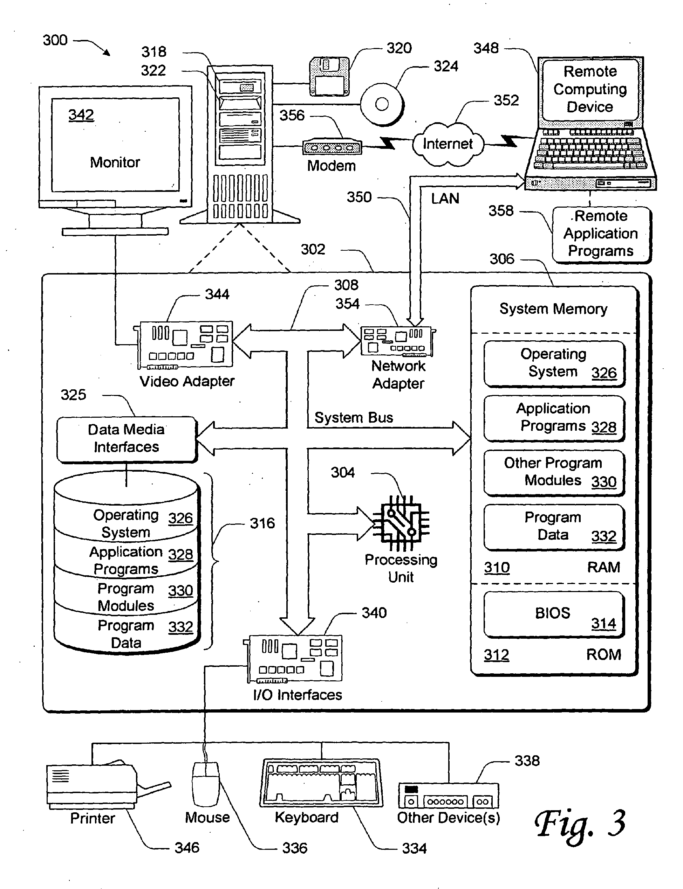

Fig. 3 illustrates an example of a suitable computing environment 300 within which an exemplary watermark-inserting media decoder, as described herein, may be implemented (either fully or partially). The computing environment 300 may be utilized in the computer and network architectures described herein.

The exemplary computing environment 300 is only one example of a computing environment and is not intended to suggest any limitation as to the scope of use or functionality of the computer and network architectures. Neither should the computing environment 300 be interpreted as having any dependency or requirement relating to any one or combination of components illustrated in the exemplary computing environment 300.

The exemplary watermark-inserting media decoder may be implemented with numerous other general purpose or special purpose computing system environments or configurations. Examples of well known computing systems, environments, and/or configurations that may be suitable for use include, but are not limited to, personal computers, server computers, thin clients, thick clients, hand-held or laptop devices, multiprocessor systems, microprocessor-based systems, set top boxes, personal digital assistants (PDA), appliances, special-purpose electronics (e.g., a DVD player), programmable consumer electronics, network PCs, minicomputers, mainframe computers, distributed computing environments that include any of the above systems or devices, and the like.

The exemplary watermark-inserting media decoder may be described in the general context of processor-executable instructions, such as program modules, being executed by a computer. Generally, program modules include routines, programs, objects, components, data structures, etc. that perform particular tasks or implement particular abstract data types. The exemplary watermark-inserting media decoder may also be practiced in distributed computing environments where tasks are performed by remote processing devices that are linked through a communications network. In a distributed computing environment, program modules may be located in both local and remote computer storage media including memory storage devices.

The computing environment 300 includes a general-purpose computing device in the form of a computer 302. The components of computer 302 may include, but are not limited to, one or more processors or processing units 304, a system memory 306, and a system bus 308 that couples various system components, including the processor 304, to the system memory 306.

The system bus 308 represents one or more of any of several types of bus structures, including a memory bus or memory controller, a peripheral bus, an accelerated graphics port, and a processor or local bus using any of a variety of bus architectures. By way of example, such architectures can include a CardBus, Personal Computer Memory Card International Association (PCMCIA), Accelerated Graphics Port (AGP), Small Computer System Interface (SCSI), Universal Serial Bus (USB), IEEE 1394, a Video Electronics Standards Association (VESA) local bus, and a Peripheral Component Interconnects (PCI) bus, also known as a Mezzanine bus.

Computer 302 typically includes a variety of processor-readable media. Such media may be any available media that is accessible by computer 302 and includes both volatile and non-volatile media, removable and non-removable media.

The system memory 306 includes processor-readable media in the form of volatile memory, such as random access memory (RAM) 310, and/or non-volatile memory, such as read only memory (ROM) 312. A basic input/output system (BIOS) 314, containing the basic routines that help to transfer information between elements within computer 302, such as during start-up, is stored in ROM 312. RAM 310 typically contains data and/or program modules that are immediately accessible to and/or presently operated on by the processing unit 304.

Computer 302 may also include other removable/non-removable, volatile/non-volatile computer storage media. By way of example, Fig. 3 illustrates a hard disk drive 316 for reading from and writing to a non-removable, non-volatile magnetic media (not shown), a magnetic disk drive 318 for reading from and writing to a removable, non-volatile magnetic disk 320 (e.g., a "floppy disk"), and an optical disk drive 322 for reading from and/or writing to a removable, non-volatile optical disk 324 such as a CD-ROM, DVD-ROM, or other optical media. The hard disk drive 316, magnetic disk drive 318, and optical disk drive 322 are each connected to the system bus 308 by one or more data media interfaces 325. Alternatively, the hard disk drive 316, magnetic disk drive 318, and optical disk drive 322 may be connected to the system bus 308 by one or more interfaces (not shown).

The disk drives and their associated processor-readable media provide non-volatile storage of computer readable instructions, data structures, program modules, and other data for computer 302. Although the example illustrates a hard disk 316, a removable magnetic disk 320, and a removable optical disk 324, it is to be appreciated that other types of processor-readable media, which may store data that is accessible by a computer, such as magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like, may also be utilized to implement the exemplary computing system and environment.

Any number of program modules may be stored on the hard disk 316 magnetic disk 320, optical disk 324, ROM 312, and/or RAM 310, including ,by way of example, an operating system 326, one or more application programs 328, other program modules 330, and program data 332.

A user may enter commands and information into computer 302 via input devices such as a keyboard 334 and a pointing device 336 (e.g., a "mouse"). Other input devices 338 (not shown specifically) may include a microphone, joystick, game pad, satellite dish, serial port, scanner, and/or the like. These and other input devices are connected to the processing unit 304 via input/output interfaces 340 that are coupled to the system bus 308, but may be connected by other interface and bus structures, such as a parallel port, game port, or a universal serial bus (USB).

A monitor 342 or other type of display device may also be connected to the system bus 308 via an interface, such as a video adapter 344. In addition to the monitor 342, other output peripheral devices may include components, such as speakers (not shown) and a printer 346, which may be connected to computer 302 via the input/output interfaces 340.

Computer 302 may operate in a networked environment using logical connections to one or more remote computers, such as a remote computing device 348. By way of example, the remote computing device 348 may be a personal computer, portable computer, a server, a router, a network computer, a peer device or other common network node, and the like. The remote computing device 348 is illustrated as a portable computer that may include many or all of the elements and features described herein, relative to computer 302.

Logical connections between computer 302 and the remote computer 348 are depicted as a local area network (LAN) 350 and a general wide area network (WAN) 352. Such networking environments are commonplace in offices, enterprise-wide computer networks, intranets, and the Internet. Such networking environments may be wired or wireless.

When implemented in a LAN networking environment, the computer 302 is connected to a local network 350 via a network interface or adapter 354. When implemented in a WAN networking environment, the computer 302 typically includes a modem 356 or other means for establishing communications over the wide network 352. The modem 356, which may be internal or external to computer 302, may be connected to the system bus 308 via the input/output interfaces 340 or other appropriate mechanisms. It is to be appreciated that the illustrated network connections are exemplary and that other means of establishing communication link(s) between the computers 302 and 348 may be employed.

In a networked environment, such as that illustrated with computing environment 300, program modules depicted relative to the computer 302, or portions thereof, may be stored in a remote memory storage device. By way of example, remote application programs 358 reside on a memory device of remote computer 348. For purposes of illustration, application programs and other executable program components, such as the operating system, are illustrated herein as discrete blocks, although it is recognized that such programs and components reside at various times in different storage components of the computing device 302, and are executed by the data processor(s) of the computer.

### Processor-Executable Instructions

An implementation of an exemplary watermark-inserting media decoder may be described in the general context of processor-executable instructions, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments.

### Exemplary Operating Environment

Fig. 3 illustrates an example of a suitable operating environment 300 in which an exemplary watermark-inserting media decoder may be implemented. Specifically, the exemplary watermark-inserting media decoder(s) described herein may be implemented (wholly or in part) by any program modules 328-330 and/or operating system 326 in Fig. 3 or a portion thereof.

The operating environment is only an example of a suitable operating environment and is not intended to suggest any limitation as to the scope or use of functionality of the exemplary watermark-inserting media decoder(s) described herein. Other well known computing systems, environments, and/or configurations that are suitable for use include, but are not limited to, personal computers (PCs), server computers, hand-held or laptop devices, multiprocessor systems, microprocessor-based systems, programmable consumer electronics, wireless phones and equipment, general and special-purpose appliances, application-specific integrated circuits (ASICs), network PCs, minicomputers, mainframe computers, distributed computing environments that include any of the above systems or devices, and the like.

### Processor-readable Media

An implementation of an exemplary watermark-inserting media decoder may be stored on or transmitted across some form of processor-readable media. Processor-readable media may be any available media that may be accessed by a computer. By way of example, processor-readable media may comprise, but is not limited to, "computer storage media" and "communications media."

"Computer storage media" include volatile and non-volatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by a computer.

"Communication media" typically embodies processor-readable instructions, data structures, program modules, or other data in a modulated data signal, such as carrier wave or other transport mechanism. Communication media also includes any information delivery media.

The term "modulated data signal" means a signal that has one or more of its characteristics set or changed in such a manner as to encode information in the signal. By way of example, communication media may comprise, but is not limited to, wired media such as a wired network or direct-wired connection, and wireless media such as acoustic, RF, infrared, and other wireless media. Combinations of any of the above are also included within the scope of processor-readable media.

### Conclusion

Although the one or more above-described implementations have been described in language specific to structural features and/or methodological steps, it is to be understood that other implementations may be practiced without the specific features or steps described. Rather, the. specific features and steps are disclosed as preferred forms of one or more implementations.

## Claims

1. A system comprising:
a decryptor (110) configured to obtain (210) and decrypt (216) encrypted, encoded media, wherein the decryptor decrypts the encrypted, encoded media by using a license;
a decoder (120) coupled to the decryptor and configured to decode (218) encoded media;
a watermark inserter (130) coupled to the decoder and to the decryptor, wherein the watermark inserter is configured to obtain the license from the decryptor, generate (220) a watermark, based at least in part, on the obtained license, and insert (222) the watermark to the decoded encoded media.

2. A system as recited in claim 1, wherein the license comprises a first unique identifier.

3. A system as recited in claim 2, wherein the decryptor is configured to obtain a second unique identifier and generates the first unique identifier based on the second unique identifier.

4. A system as recited in claim 3, wherein the first and second unique identifiers are different.

5. A system as recited in claim 3, wherein the first and second unique identifiers are equivalent.

6. A system as recited in claim 3, wherein the decryptor obtains the second unique identifier pursuant to a digital rights management, DRM, licensing request.

7. A system as recited in claim 6 further comprising a license server coupled to the decryptor and configured to obtain the DRM licensing requests and issue the second unique identifier responsive thereto.

8. A system as recited in claim 2, wherein encoded media include digital content selected from a group consisting of audio, image, video, text, hypertext, and data.

9. A method comprising:
obtaining (210) and decrypting (216) encrypted, encoded media, wherein the encrypted, encoded media is decrypted by using a license;
decoding (218) the decrypted, encoded media;
obtaining a first unique identifier from the license;
generating (220) a watermark in association with the first unique identifier;
adding (222) the watermark to the decoded encoded media.

10. A method as recited in claim 9 further comprising obtaining a second unique identifier and generating the first unique identifier based on the second unique identifier.

11. A method as recited in claim 9 further comprising obtaining a second unique identifier and generating the first unique identifier based on the second unique identifier, wherein the second unique identifier is obtained pursuant to a DRM licensing request.

12. A method as recited in claim 9, wherein encoded media include digital content selected from a group consisting of audio, image, video, text, hypertext, and data.

13. A processor-readable program product having processor-executable instructions that, when executed by a processor, perform the acts comprising:
obtaining (210) and decrypting (216) encrypted, encoded media, wherein the encrypted, encoded media is decrypted by using a license;
decoding (218) the decrypted, encoded media;
obtaining a first unique identifier from the license;
generating (220) a watermark in association with the first unique identifier;
adding (222) the watermark to the decoded encoded media.

14. A processor-readable program product as recited in claim 13, wherein encoded media include digital content selected from a group consisting of audio, image, video, text, hypertext, and data.

## Patentansprüche

1. System, das umfasst:
eine Entschlüsselungseinrichtung (110), die so konfiguriert ist, dass sie verschlüsselte codierte Medien bezieht (210) und entschlüsselt (216), wobei die Entschlüsselungseinrichtung die verschlüsselten codierten Medien unter Verwendung einer Lizenz entschlüsselt;
eine Decodiereinrichtung (120), die mit der Entschlüsselungseinrichtung gekoppelt und zum Decodieren (218) codierter Medien konfiguriert ist;
eine Wasserzeichen-Einfügeeinrichtung (130), die mit der Decodiereinrichtung und der Entschlüsselungseinrichtung gekoppelt ist, wobei die Wasserzeichen-Einfügeeinrichtung so konfiguriert ist, dass sie die Lizenz von der Entschlüsselungseinrichtung bezieht, ein Wasserzeichen erzeugt, das wenigstens teilweise auf der bezogenen Lizenz basiert, und das Wasserzeichen in die decodierten codierten Medien einfügt (222).

2. System nach Anspruch 1, wobei die Lizenz eine erste eindeutige Kennung umfasst.

3. System nach Anspruch 2, wobei die Entschlüsselungseinrichtung so konfiguriert ist, dass sie eine zweite eindeutige Kennung bezieht und die erste eindeutige Kennung auf Basis der zweiten eindeutigen Kennung erzeugt.

4. System nach Anspruch 3, wobei die erste und die zweite eindeutige Kennung verschieden sind.

5. System nach Anspruch 3, wobei die erste und die zweite eindeutige Kennung äquivalent sind.

6. System nach Anspruch 3, wobei die Entschlüsselungseinrichtung die zweite eindeutige Kennung entsprechend einer DRM-Lizenzierungsanforderung (digital rights management licensing request) bezieht.

7. System nach Anspruch 6, das des Weiteren einen Lizenz-Server umfasst, der mit der Entschlüsselungseinrichtung gekoppelt und so konfiguriert ist, dass er die DRM-Lizenzierungsanforderungen erfasst und in Reaktion darauf die zweite eindeutige Kennung ausgibt.

8. System nach Anspruch 2, wobei codierte Medien digitalen Inhalt enthalten, der aus einer Gruppe ausgewählt wird, die aus Ton, Bild, Video, Text, Hypertext und Daten besteht.

9. Verfahren, das umfasst:
Beziehen (210) und Entschlüsseln (216) verschlüsselter codierter Medien, wobei die verschlüsselten codierten Medien unter Verwendung einer Lizenz entschlüsselt werden;
Decodieren (218) der entschlüsselten codierten Medien;
Beziehen einer ersten eindeutigen Kennung aus der Lizenz;
Erzeugen (220) eines Wasserzeichens in Verbindung mit der ersten eindeutigen Kennung;
Hinzufügen (222) des Wasserzeichens zu den decodierten codierten Medien.

10. Verfahren nach Anspruch 9, das des Weiteren Beziehen einer zweiten eindeutigen Kennung und Erzeugen der ersten eindeutigen Kennung auf Basis der zweiten eindeutigen Kennung umfasst.

11. Verfahren nach Anspruch 9, das des Weiteren Beziehen einer zweiten eindeutigen Kennung und Erzeugen der ersten eindeutigen Kennung auf Basis der zweiten eindeutigen Kennung umfasst, wobei die zweite eindeutige Kennung entsprechend einer DRM-Lizenzierungsanforderung bezogen wird.

12. Verfahren nach Anspruch 9, wobei codierte Medien digitalen Inhalt enthalten, der aus einer Gruppe ausgewählt wird, die aus Ton, Bild, Video, Text, Hypertext und Daten besteht.

13. Computerlesbares Programmerzeugnis, das durch einen Prozessor ausführbare Befehle aufweist, die, wenn sie durch einen Prozessor ausgeführt werden, die Vorgänge durchführen, die umfassen:
Beziehen (210) und Entschlüsseln (216) verschlüsselter codierter Medien, wobei die verschlüsselten codierten Medien unter Verwendung einer Lizenz entschlüsselt werden;
Decodieren (218) der entschlüsselten codierten Medien;
Beziehen einer ersten eindeutigen Kennung aus der Lizenz;
Erzeugen (220) eines Wasserzeichens in Verbindung mit der ersten eindeutigen Kennung;
Hinzufügen (222) des Wasserzeichens zu den decodierten codierten Medien.

14. Durch einen Prozessor lesbares Programmerzeugnis nach Anspruch 13, wobei codierte Medien digitalen Inhalt enthalten, der aus einer Gruppe ausgewählt wird, die aus Ton, Bild, Video, Text, Hypertext und Daten besteht.

## Revendications

1. Système comprenant :
- un décrypteur (110) qui est conçu pour obtenir (210) et décrypter (216) un support d'informations codé crypté, le décrypteur décryptant le support codé crypté, en utilisant une autorisation ;
- un décodeur (120) qui est relié au décrypteur et qui est conçu pour décoder (218) le support codé ;
- un dispositif d'insertion de tatouage ou filagrane numérique (130) qui est relié au décodeur et au décrypteur, le dispositif d'insertion de tatouage numérique étant conçu pour obtenir l'autorisation du décrypteur, pour générer (220) un tatouage numérique sur la base, au moins en partie, de l'autorisation obtenue, et pour insérer (222) le tatouage dans le support codé décodé.

2. Système selon la revendication 1, dans lequel l'autorisation comprend un premier identifiant unique.

3. Système selon la revendication 2, dans lequel le décrypteur est conçu pour obtenir un second identifiant unique et génère le premier identifiant unique sur la base du second.

4. Système selon la revendication 3, dans lequel les premier et second identifiants uniques sont différents.

5. Système selon la revendication 3, dans lequel les premier et second identifiants uniques sont équivalents.

6. Système selon la revendication 3, dans lequel le décrypteur obtient le second identifiant unique à la suite d'une demande d'autorisation de gestion de droits numériques, DRM.

7. Système selon la revendication 6, comprenant également un serveur d'autorisation qui est relié au décrypteur et qui est conçu pour obtenir les demandes d'autorisation DRM et pour fournir le second identifiant unique répondant à ces demandes.

8. Système selon la revendication 2, selon lequel le support codé a un contenu numérique choisi dans un groupe comprenant de l'audio, des images, de la vidéo, du texte, de l'hypertexte et des données.

9. Méthode comprenant les étapes qui consistent à :
- obtenir (210) et décrypter (216) un support d'informations codé crypté, ce support codé crypté étant décrypté à l'aide d'une autorisation ;
- décoder (218) le support codé décrypté ;
- obtenir un premier identifiant unique à partir de l'autorisation ;
- générer (220) un tatouage numérique en association avec le premier identifiant unique ;
- ajouter (222) le tatouage numérique au support codé décodé.

10. Méthode selon la revendication 9, comprenant également l'étape qui consiste à obtenir un second identifiant unique et à générer le premier identifiant unique sur la base du second.

11. Méthode selon la revendication 9, comprenant également l'étape qui consiste à obtenir un second identifiant unique et à générer le premier identifiant unique sur la base du second, le second identifiant unique étant obtenu à la suite d'une demande d'autorisation DRM.

12. Méthode selon la revendication 9, selon laquelle le support codé a un contenu numérique choisi dans un groupe comprenant de l'audio, des images, de la vidéo, du texte, de l'hypertexte et des données.

13. Produit de programme apte à être lu par un processeur, qui a des instructions exécutables par le processeur qui, lorsqu'elles sont exécutées par celui-ci, exécutent les actions comprenant :
- l'obtention (210) et le décryptage (216) d'un support codé crypté, le support codé crypté étant décrypté à l'aide d'une autorisation ;
- le décodage (218) du support codé décrypté ;
- l'obtention d'un premier identifiant unique à partir de l'autorisation ;
- la production (220) d'un tatouage numérique en association avec le premier identifiant unique ;
- l'adjonction (222) du tatouage au support codé décodé.

14. Produit de programme apte à être lu par un processeur selon la revendication 13, dans lequel le support codé a un contenu numérique choisi dans un groupe comprenant de l'audio, des images, de la vidéo, du texte, de l'hypertexte et des données.
